# EUROPEAN PATENT SPECIFICATION

(11) **EP 2 296 918 B1**
(45) Date of publication and mention of the grant of the patent: **23.01.2013**
(21) Application number: 08760261.1
(22) Date of filing: 30.05.2008
(51) Int. Cl.: B60C 19/12, B29C 73/16, B29C 73/20, C09K 3/10

(54) **TYRE COMPRISING A SEALING MATERIAL COMPRISING A PARTIALLY CROSS-LINKED STYRENE-BUTADIENE RUBBER**
EINEN TEILWEISE VERNETZTEN STYROL-BUTADIEN-KAUTSCHUK UMFASSENDES DICHTUNGSMATERIAL UMFASSENDER REIFEN
PNEU RENFERMANT UNE MATIÈRE D'ÉTANCHÉITÉ RENFERMANT UN CAOUTCHOUC DE STYRÈNE-BUTADIÈNE PARTIELLEMENT RÉTICULÉ

(43) Date of publication of application: 23.03.2011
(73) Proprietor: Pirelli Tyre S.P.A., 20126 Milan (IT)
(72) Inventor: GIANNINI, Luca, I-20126 Milano (IT); NAHMIAS NANNI, Marco, I-20126 Milano (IT); MANCINI, Gianni, I-20126 Milano (IT); PUPPI, Cristiano, I-20126 Milano (IT); SOLINAS, Stefano, I-20126 Milano (IT)
(74) Representative: Allaix, Roberto
(86) International application number: PCT/EP2008/056671
(87) International publication number: WO 2009/143895

(56) References cited:
- EP-A- 0 161 201
- EP-A- 0 928 680
- WO-A1-03/101709
- GB-A- 2 045 793
- GB-A- 2 146 959
- JP-A- 4 286 631
- US-A- 4 528 331
- US-A- 4 664 168
- US-A1- 2008 121 328

## Description

### Field of the invention

The present invention relates to a self-sealing tyre for vehicle wheels.

More in particular, the present invention relates to a self-sealing tyre for vehicle wheels comprising a sealing material according to claim 1 and to said sealing material according to claim 16

### Background of the invention

In the industrial field of tyres for vehicle wheels, various attempts have been made to produce self-sealing tyres, in other words tyres which may retard or prevent the loss of air and consequent deflation of the tyres themselves following a puncture caused e.g. by a sharp object (a nail, for example).

To achieve the above goal, self-sealing tyres are known which are provided with at least one layer comprising a polymeric material which may adhere to the object causing the puncture and may also flow into the puncture site when said object is removed, thus sealing the puncture and preventing the outflow of air from the tyre.

Self-sealing tyres are described, for example, in United States Patent US 3,981,342 which discloses a self-sealing tubeless tyre provided with a layer including a composition comprising a mixture of a low molecular weight liquid elastomer and a high molecular weight solid elastomer, and a quantity of a cross-linking agent sufficient to give a partial cross-linking of said mixture, said liquid elastomer being present in a greater quantity than said solid elastomer.

United States Patent US 3,565,151 describes a self-sealing tubeless tyre comprising two layers of sealing material in the crown area of the tyre separated by the inner liner which extends from bead to bead inside the carcass plies of the tyre. The sealing material basically consists of a styrene butadiene (SBR) type of synthetic rubber containing a small amount of curatives and a blend of from 80 to 95 parts of cold polymerized SBR and from 5 to 20 parts of hot polymerized SBR.

United States Patent US 4,228,839 discloses a self-sealing tyre provided with a layer comprising a mixture of a radiation-degradable polymeric material and a polymeric material which may be cross-linked by radiation and/or by heat.

United States Patent US 4,113,799 discloses a sealant composition comprising a high average molecular weight butyl rubber and a low average molecular weight butyl rubber in a ratio of high to low molecular weight butyl rubber of between about 20/80 to 60/40, in admixture with a tackifier present in an amount between about 55 and 70 weight % of the composition.

United States Patent US 4,664,168 discloses a self-sealing pneumatic tyre that has an inner surface provided with a layer of sealant and a plurality of edge strips that partially overlap the sealant layer to retain the sealant in position during construction and operation of the tyre.

United States Patents US 4,913,209 and US 5,085,942 disclose a self-sealing tubeless pneumatic tyre constructed upon a laminate of elastomers comprising an air-impervious liner or elastomeric strip ("inner liner") coated with a thin layer of bare (that is, not covered and not constrained by a sheet of flexible material), elastomeric puncture-sealing material ("sealant"), wherein the upper surface of the sealant is detackified with a detackifier which prevents adhesion of the surface to metal, and also to a hot, pressurized curing bladder.

United States Patents US 7,004,217 discloses self-sealing tubeless pneumatic tyre comprising a sealant chamber filled with a sealant composition defined between an outer liner and an inner liner, wherein the inner liner is made of flexible rubber having a 300% modulus of 60 kgf/cm² or less.

Document WO-A-03/101709 discloses a tyre for vehicle roheels comprising a layer of sealing material according to the preamble of claim 1.

### Summary of the invention

The Applicant has perceived that one of the major problems encountered in self-sealing tyres is that of finding a correct combination of properties for the sealing material used together with a proper positioning of the sealing material within the tyre structure. In fact, said material should adhere to the object causing the puncture, move rapidly inside the puncture when the object causing the puncture is removed, without to be retained from any tyre structure contacting it, and not flow out of the puncture, in order to prevent the loss of air and the consequent deflation of the tyre.

Furthermore, the sealing material should maintain its position inside the tyre when the vehicle is halted or during storage. On the other hand, when the tyre is made to move, which could potentially create nonuniformities in the distribution of the sealing material (e.g. due to high speed), said sealing material should be capable of maintaining its uniform distribution inside the tyre. In fact, a displacement of the sealing material from its original position and its accumulation in specific areas of the tyre would not only cause a loss of balance in the weight distribution within the tyre, but would also make its use as a sealing layer ineffective, or would at least impart an unsatisfactory self-sealing capacity to the tyre.

Additionally, the sealing material should also preferably be capable of being applied during the building of the tyre, thus avoiding the need to subject the finished tyre to further post-production treatments. In this regard, the sealing material should then be capable to be easily processed in conventional tyre building apparatus without the need of additional and/or expensive investment for the upgrade or substitution thereof.

The Applicant has now found that it is possible to obtain the desired combination of properties by using a sealing material comprising, as a major component, at least one natural or synthetic elastomer, as a minor component, at least one pre-crosslinked elastomer, preferably a styrene-butadiene elastomer, a low amount of at least one tackifying agent, a low amount of at least one reinforcing filler, and, preferably, at least one homogenizing agent.

The Applicant has also found that good results in terms of properties of the finished self-sealing tubeless tyre are obtained by inserting the above described sealing material between the carcass structure and an air-impermeable layer, usually named liner, provided in an inner position with respect to the carcass structure.

The Applicant has also noticed that the results in terms of properties of the finished self-sealing tubeless tyre are further improved when a cushion layer is interposed between the carcass structure and the liner, preferably only in the laterally opposite sidewall regions of the tyre, and the liner has a thickness lower than 1 mm.

The Applicant has noticed that said sealing material can be processed in conventional tyre building apparatus. More in particular, the Applicant has observed that said sealing material is easily processable in conventional apparatus for rubber mixing such as, for example, a Banbury mixer, as well as in conventional apparatus for rubber coating such as, for example, an extruder.

The Applicant has noticed that the sealing material does not require the addition of any crosslinking agent to cure it, so making the composition much more easily processable without requiring any specific control of temperature or other process conditions to avoid premature or excessive cross-linking of the composition, which negatively affects the sealing materials comprising a crosslinking system to increase the viscosity or the stability thereof.

The Applicant has observed that said sealing material is able to maintain its position inside the finished tyre both when the vehicle is running or is halted and during storage, even maintaining the flowability necessary in order to moving rapidly inside the puncture.

In particular, the Applicant has observed that when said sealing material is interposed between the carcass structure and the thin liner, the flowability of the sealing material at the time of the puncture of the tyre allows a rapid penetrating and closing the hole, with a remarkable reduction of the amount of air pressure loss.

Without being limited by any hypothesis, the Applicant believes that said peculiar combination of properties is given by the proper combination of the present invention, wherein the natural or synthetic elastomer(s) mainly confer(s) the adhesion properties, the pre-crosslinked elastomer(s) mainly confer(s) the stability properties, and the low amounts of tackifying agent(s) and reinforcing filler(s) mainly confer the flowability properties.

Furthermore, the Applicant has also particularly observed that when a further layer is interposed between the carcass structure and the liner in the laterally opposite sidewall regions of the tyre, the sealing material is better contained inside the tyre either during tyre manufacturing operations, or under tyre storage conditions, or when the tyre is running after installation on vehicle wheels.

In a first aspect, therefore, the present invention relates to a tyre for vehicle wheels, comprising:
- a carcass structure of a substantially toroidal shape, having opposite lateral edges terminating in respective bead structures, said carcass structure comprising at least one carcass ply;
- a belt structure applied in a radially external position with respect to said carcass structure, said belt structure comprising at least one belt layer;
- a tread band applied in a radially external position with respect to said belt structure;
- a pair of sidewalls applied laterally on opposite sides with respect to said carcass structure;
- a substantially air-impermeable layer applied in a radially inner position with respect to said at least one carcass ply;
- a layer of sealing material applied in a radially inner position with respect to said at least one carcass ply and, preferably, in a radially outer position with respect to said air-impermeable layer;
   wherein said sealing material comprises:
   from 55 phr to 95 phr, preferably from 65 phr to 90 phr, of at least one natural or synthetic elastomer;
   from 5 phr to 45 phr, preferably from 10 phr to 35 phr, of at least one pre-crosslinked elastomer, preferably a styrene-butadiene elastomer;
   from 5 to 50 phr, preferably from 20 phr to 40 phr, of at least one tackifying agent, and
   from 1 to 40 phr, preferably from 5 to 30 phr, of at least one reinforcing filler.

For the purposes of the present description and of the claims which follow, the expression "phr" is intended to indicate the parts by weight of a given component per 100 parts by weight of the elastomer content.

For the purposes of the present description and of the claims which follow, except in the operating examples, or where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In a preferred embodiment, said air-impermeable layer has a thickness lower than 1.0 mm, more preferably lower than 0.9 mm, and still more preferably lower than 0.8 mm. The Applicant has observed that the thinner said air-impermeable layer, the better the exploitability of the flowability properties of the sealing material, which is able to flow and close the hole in a quicker and more efficient way due to the compliance of the thin air-impermeable layer.

In a preferred embodiment, said at least one layer of sealing material is applied between said at least one carcass ply and said air-impermeable layer.

In a further preferred embodiment, said at least one layer of sealing material circumferentially extends over a surface substantially corresponding to the surface of development of said tread band.

In a further preferred embodiment, a strip, preferably having a substantially triangular cross section, is applied along each axially outer edge of said at least one layer of sealing material.

In a further preferred embodiment, said at least one layer of sealing material has a thickness in the range of from 1 mm to 15 mm, preferably in the range of from 2 mm to 10 mm, and more preferably in the range of from 2 mm to 5 mm.

In a further preferred embodiment, a cushion layer is applied between said air-impermeable layer and said at least one carcass ply. More preferably, said cushion layer is applied only in the laterally opposite sidewall regions of the tyre.

In this case, said at least one layer of sealing material is applied between said at least one carcass ply and said cushion layer, or, alternatively between said cushion layer and said air-impermeable layer.

The Applicant has noticed that the presence of the cushion layer, preferably applied only in the laterally opposite sidewall regions of the tyre, and especially when the air-impermeable layer has a thickness lower than 1.0 mm, improves the results in terms of properties of the finished self-sealing tubeless tyre.

An other embodiment rohich does not form part of the present invention relates to a tyre for vehicle wheels, comprising:
- a carcass structure of a substantially toroidal shape, having opposite lateral edges terminating in respective bead structures, said carcass structure comprising at least one carcass ply;
- a belt structure applied in a radially external position with respect to said carcass structure, said belt structure comprising at least one belt layer;
- a tread band applied in a radially external position with respect to said belt structure;
- a pair of sidewalls applied laterally on opposite sides with respect to said carcass structure;
- a substantially air-impermeable layer applied in a radially inner position with respect to said at least one carcass ply;
- a layer of sealing material interposed between said at least one carcass ply and said air-impermeable layer;
wherein a cushion layer is applied between said air-impermeable layer and said at least one carcass ply over a surface substantially corresponding to the surface of development of the laterally opposite sidewall regions of the tyre, and said air-impermeable layer has a thickness lower than 1.0 mm.

An other embodiment rohich does not form part of the present invention relates to a process for producing tyres for vehicle wheels, said process comprising:
- manufacturing a green tyre comprising at least one carcass ply and a substantially air-impermeable layer applied in a radially inner position with respect to said at least one carcass ply;
- subjecting the green tyre to moulding in a mould cavity formed in a vulcanization mould;
- subjecting said green tyre to crosslinking by heating to a predetermined temperature and for a predetermined period;
   wherein said process further comprises the application of, in a radially inner position with respect to said at least one carcass ply and, preferably, in a radially outer position with respect to said air-impermeable layer, a layer of sealing material, wherein said sealing material comprises:
   from 55 phr to 95 phr, preferably from 65 phr to 90 phr, of at least one natural or synthetic elastomer;
   from 5 phr to 45 phr, preferably from 10 phr to 35 phr, of at least one pre-crosslinked elastomer, preferably a styrene-butadiene elastomer;
   from 5 to 50 phr, preferably from 20 phr to 40 phr, of at least one tackifying agent, and
   from 1 to 40 phr, preferably from 5 to 30 phr, of at least one reinforcing filler.

According to one preferred embodiment, the application of said at least one layer of sealing material is carried out during the manufacturing of the green tyre.

In a preferred embodiment, the application of said at least one layer of sealing material is carried out by extrusion.

In a further preferred embodiment, the application of said at least one layer of sealing material is carried out by winding at least one ribbon-like band consisting of said sealing material in close coils. Said ribbon-like band may be produced, for example, by extruding said sealing material from an extruder including a die having an extruding hole from which the sealing material is extruded into the desired cross sectional shape.

The application of said at least one layer of sealing material can be made directly on the surface of a structural element of the tyre under manufacturing, such as, for example, the air-impermeable layer, the cushion layer, or the carcass ply. Alternatively, the application of said at least one layer of sealing material can be made on a carrier layer or a support, which may be used to previously form the sealing layer and then transfer it onto a structural element of the tyre.

In a further aspect, the present invention relates to a sealing material which comprises:
from 55 phr to 95 phr, preferably from 65 phr to 90 phr, of at least one natural or synthetic elastomer;
from 5 phr to 45 phr, preferably from 10 phr to 35 phr, of at least one pre-crosslinked styrene-butadiene elastomer;
from 5 to 50 phr, preferably from 20 phr to 40 phr, of at least one tackifying agent, and
from 1 to 40 phr, preferably from 5 to 30 phr, of at least one reinforcing filler.

According to one preferred embodiment, said sealing material may further comprise an amount of from 1 phr to 20 phr of at least one homogenizing agent.

In a further preferred embodiment, said sealing material may further comprise an amount of from 0.05 phr to 5 phr of at least one peptizer.

The present invention in at least one of the abovementioned aspects, may show one or more of the preferred characteristics hereinafter described.

The natural or synthetic elastomer advantageously employed in the present invention may be selected from commonly used elastomeric materials, that are particularly suitable for producing tyres, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomers may be selected, for example, from: cis-1,4-polyisoprene (natural or synthetic, preferably synthetic rubber), 3,4-polyisoprene, polybutadiene (in particular polybutadiene with a high 1,4-cis content), 1,3-butadiene/acrylonitrile copolymers, or mixtures thereof.

The above described natural or synthetic elastomer may be used alone or in a mixture of two or more different elastomeric polymers. The above described natural or synthetic elastomer or the mixture thereof are added to the sealing material according to the present invention in an amount of from 55 phr to 95 phr, preferably from 65 phr to 90 phr.

The pre-crosslinked elastomer useful in the present invention has been subjected to a crosslinking process, wherein a part of or all the elastomer has been crosslinked, before the addition to the sealing material of the present invention. The amount of the crosslinked portion is usually referred in the art in terms of the percentage of gel content with respect the total weight of the pre-crosslinked elastomer. The pre-crosslinked elastomer preferably has a gel content of from 10% to 100% by weight (based on the total weight of the elastomer), more preferably from 20 to 90% by weight, and most preferably from 30 to 80% by weight.

The pre-crosslinked styrene-butadiene elastomer advantageously employed in the present invention are represented by copolymers of styrene with butadiene produced by hot emulsion polymerization having styrene contents of from 1 to 60% by weight, preferably from 2 to 50% by weight.

Particularly preferred pre-crosslinked styrene-butadiene elastomer are Petroflex™ SBR 1009A, 1009S and 1018 elastomers, manufactured by Petroflex, Brasil, using either rosin or fatty acids soaps as emulsifier and coagulated by the salt-acid method, and SBR 1009, 1009A and 4503 elastomers, manufactured by ISP Corporation, Texas, USA, by hot emulsion polymerization with divinylbenzene.

The tackifying agents advantageously employed in the present invention may be selected from the group of hydrocarbon resins. The tackifying agents providing tackiness to the rubber composition means, in general, a hydrocarbon resin which has a number average molecular weight in the range of several hundreds to several thousands and provides tackiness when the resin is mixed with natural rubber or synthetic rubbers. As the resin, various types of synthetic resins may be used.

Said number average molecular weight (Mₙ) may be measured according to techniques known in the art such as, for example, by gel permeation chromatography (GPC).

Specifically, synthetic resins such as petroleum-based resins, phenol-based resins, coal-based resins and xylene-based resins and natural resins such as rosin-based resins and terpene-based resins may be used.

The petroleum-based resin may be obtained by polymerizing a fraction of cracking oil in the presence of a Friedel-Crafts-type catalyst without separating the components. The fraction of cracking oil is formed as a byproduct in the thermal cracking of naphtha in the petrochemical industry in combination with basic materials of the petrochemical industry such as ethylene and propylene and contains unsaturated hydrocarbons such as olefins and diolefins. Examples of the commercial product of the aromatic petroleum resin as shown by the trade name include PETROSIN manufactured by MITSUI SEKIYU KAGAKU Co., Ltd., PETRITE manufactured by MIKUNI KAGAKU Co., Ltd., NEOPOLYMER manufactured by NIPPON SEKIYU KAGAKU Co., Ltd., and PETCOAL manufactured by TOYO SODA Co., Ltd.

Examples of the phenol-based resin described above include alkylphenol-formaldehyde-based resins, modified resins thereof with rosin, alkylphenol-acetylene-based resins, modified alkylphenol resins and terpene-phenol resins. Specific examples include commercial products (shown by the trade names) such as HITANOL 1502 (manufactured by HITACHI KASEI Co., Ltd.) which is a novolak-type alkylphenol resin, RESINA SP-1 068 (manufactured by SI GROUP Inc.) which is an octylphenol-formaldehyde resin, DUREZ 29095 (manufactured by SUMITOMO BAKELITE) which is a para-tert-octylphenolic resin, and KORESIN (manufactured by BASF Company) which is a p-t-butylphenol-acetylene resin.

Examples of the coal-based resin include coumarone-indene resins. Specific examples include commercial products (shown by the trade names) such as NOVARES C resins (manufactured by RUTGERS CHEMICAL GmbH) which are purely synthetic indene-coumarone-resins (like NOVARES C10, C30, and C70) produced by the polymerization of the so-called indene fraction obtained from the distillation of coal tar, or such as NOVARES CA resins, which are phenol-modified indene-coumarone-resins.

Examples of the xylene-based resin include xylene-formaldehyde resins.

The above described tackifying agents may be used alone or in a mixture of two or more different tackifying agents. The total amount of the above described tackifying agents or the mixture thereof ranges from 10 phr to 70 phr, preferably of from 20 phr to 40 phr.

The reinforcing filler advantageously employed in the present invention may be selected from carbon black, silica, alumina, aluminosilicates, calcium carbonate, kaolin, or mixtures thereof. Carbon black is preferred.

The types of carbon black which may be used according to the present invention may be selected from those conventionally used in the production of tyres which generally have a surface area of not lower than 20 m²/g (determined by absorption of CTAB as described in the ISO 6810 standard). Alternatively, carbon blacks having a surface area lower than 20 m²/g may also be used.

The silica which may be used according to the present invention may generally be a pyrogenic silica or, preferably, a precipitated silica, having a surface area BET (measured according to the ISO 5794/1 standard) in the range of from 50 m²/g to 500 m²/g, preferably of from 70 m²/g to 300 m²/g. Alternatively, silica having a surface area BET lower than 50 m²/g may also be used.

The reinforcing filler is added to the sealing material according to the present invention in an amount of from 1 phr to 40 phr, preferably from 5 phr to 30 phr, and more preferably from 10 phr to 20 phr.

The sealing material of the present invention also preferably comprises from 1 phr to 20 phr of homogenizing agent adapted to facilitate blending of aromatic-based with non-aromatic-based polymers. In the sealing material of the invention, these homogenizing agents serve to facilitate the blending of the styrene-based elastomer, which has the character of an aromatic-based polymer, into the rubber components which have a predominantly aliphatic or non-aromatic character. Typically, such homogenizing agents comprise a blend of hydrocarbon resins, fatty acid esters, and naphthenic oils. One particularly preferred example is the material available under the name Struktol™ 40MS, available from Struktol Canada Inc., Scarborough, Ontario, Canada. More preferably, the sealing material comprises from 1 to 10 phr of said homogenizing agent.

The sealing material of the present invention also preferably comprises from 0.05 phr to 5 phr, preferably from 0.1 phr to 1 phr of at least one peptizer to facilitate the mastication operation, by reducing viscosity and dump temperature and improving the uniformity of the resulting mixture. Thiophenols and disulfides are widely employed as a peptizer. Typical peptizers may be, for example, pentachlorothiophenol and dibenzamidodiphenyl disulfide. Specific examples include commercial products (shown by the trade names) such as Akrochem Peptizer 4P and 6P (manufactured by Akrochem Corporation, USA), Renacit 11/WG (manufactured by Lanxess Deutschland Gmbh).

The sealing material according to the present invention may optionally comprise other additives commonly used in elastomeric compositions. For example, antioxidants, anti-ageing agents, adhesives, anti-ozone agents, modifying resins, coupling agents for silica (such as, for example, silanes), or mixtures thereof may be added to said sealing material.

As disclosed above, the application of said at least one layer of sealing material may be carried out during the manufacturing of the green tyre.

In this case, the application may be carried out, for example, by applying a layer of sealing material onto a support and then superimposing a layer of elastomeric material which provides the necessary impermeability to the inflation air of the tyre. Said layer of sealing material may be prevented from adhering to the support, for example, by first applying at least one carrier layer of flexible material onto the support, followed by the application of said layer of sealing material, and then superimposing the air-impermeable layer of elastomeric material. The three-layer structure is then moved to a building drum, with the air-impermeable layer contacting the surface of the drum. After that, said at least one carrier layer of flexible material is removed, and then followed the application of said at least one carcass ply to build the carcass structure, and the application of the other structural elements (belt structure, sidewalls, tread band, and so on) to build the green tyre according to techniques well known in the art.

Preferably, said air-impermeable layer, generally called liner, may first be applied onto the building drum, followed by the application of said layer of sealing material over a surface substantially corresponding to the surface of development of the tread band of the tyre, and then by the application of a cushion layer over a surface substantially corresponding to the surface of development of the laterally opposite sidewall regions of the tyre.

Alternatively a double layer structure comprising the air-impermeable layer and the cushion layer may be prepared by standard methods such as co-extrusion or calendering. The cushion layer might extend over substantially the whole surface extension of the liner or, preferably, be limited to a surface substantially corresponding to the surface of development of the laterally opposite sidewall regions of the tyre.

Another method is to extrude the sealing material onto the desired area of a tyre structural element, such as for example, an air-impermeable layer, at high temperature in the form of a layer having the desired thickness.

Alternatively, a previously prepared layer such as, for example, an extruded layer of sealing material of suitable width and thickness may be transferred by any suitable means from a carrier layer onto the desired area of a tyre structural element.

The elastomeric material usually employed in the manufacturing of the liner can be any crosslinkable elastomeric material able to provide the necessary impermeability to air required by a tubeless tyre inflated at its nominal pressure. Preferably, the liner is usually formed mainly by butyl rubber (IIR) and halogenated butyl rubber (XIIR). Alternatively, the liner can be formed by dynamically vulcanized blend of elastomers and resins, i.e., the so-called dynamically vulcanized alloy or DVA, as disclosed, for example, in WO 2007/050076, US 6,079,465 and US 6,617,383.

The cushion layer can be formed of the same elastomeric material of the liner or can be formed by a different material. Preferably, the cushion layer is formed mainly by natural or synthetic isoprene rubber (NR). Optionally butyl rubber (IIR), halogenated butyl rubber (XIIR), or styrene-butadiene rubber could be blended to the natural or synthetic isoprene rubber.

The sealing material according to the present invention may be prepared by mixing the components indicated above with the other additives which may be present, according to methods known in the art. The mixing may be carried out, for example, by means of a mixer of the open-mill type, or an internal mixer of the type with tangential rotors (Banbury) or interlocking rotors (Intermix), or in continuous mixers of the Ko-Kneader (Buss) type or the multiple-screws co-rotating or counterrotating type.

### Brief description of the drawings

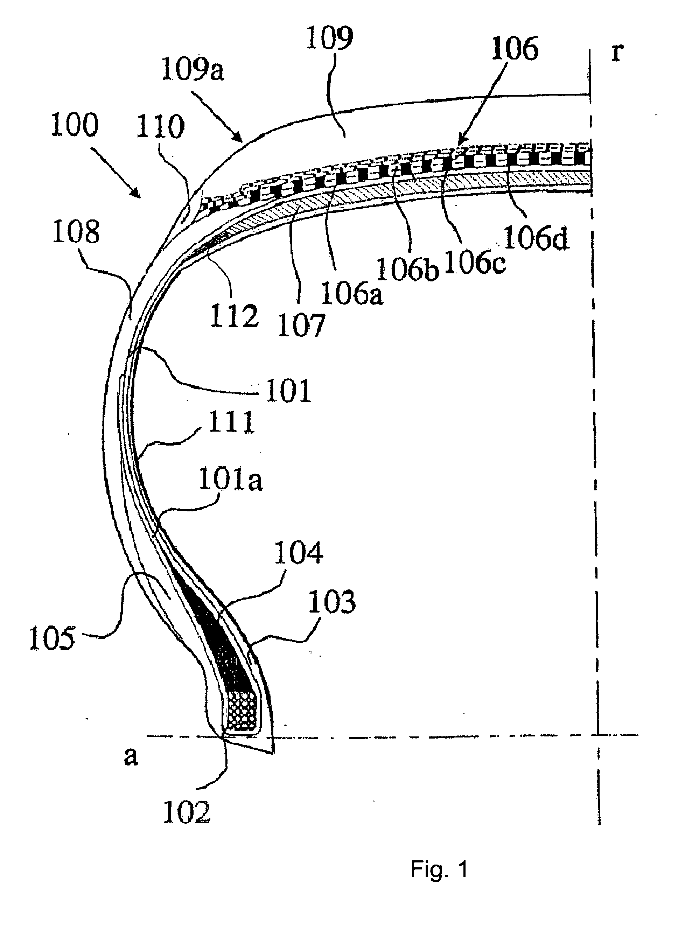

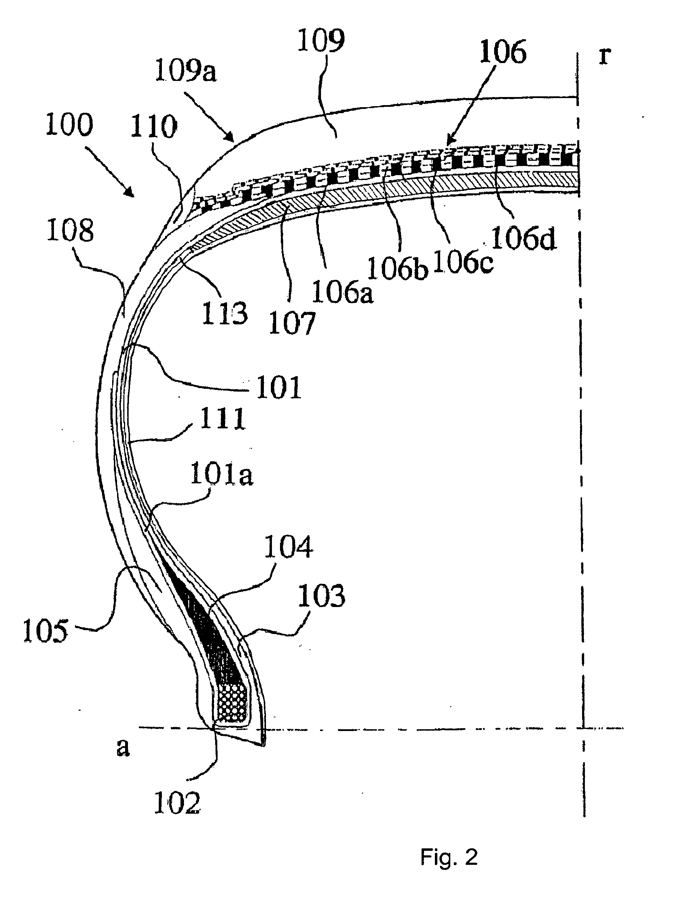

The present invention will now be illustrated in further detail by means of illustrative embodiments, with reference to the attached Fig. 1 and Fig.2 which show a view in cross-section of a portion of a tyre made according to the present invention.

### Detailed description of the preferred embodiments

With reference to Fig. 1 and Fig. 2, "a" indicates an axial direction, and "r" indicates a radial direction. For simplicity, Fig. 1 and Fig. 2 show only a portion of the tyre, the remaining portion, which is not shown, being identical and symmetrically arranged with respect to the radial direction "r".

The tyre (100) comprises at least one carcass ply (101) the opposite lateral edges of which are associated with respective bead structures (103) comprising at least one bead core (102) and at least one bead filler (104). The association between the carcass ply (101) and the bead core (102), in this case, is achieved by turning back the opposite lateral edges of the carcass ply (101) around the bead core (102), so as to form the so-called carcass turn-up (101 a) as shown in Fig. 1.

Alternatively, the conventional bead core (102) may be replaced with at least one annular insert formed by rubberized wires arranged in concentric coils (not shown in Fig. 1) (see, for example, European Patent Applications EP 928,680, or EP 928,702). In this case, the carcass ply (101) is not turned-back around said annular inserts, the coupling being provided by retaining the ends of the ply (not shown in Fig. 1) between the annular insert(s).

The carcass ply (101) usually comprises a plurality of reinforcing cords arranged parallel to each other and at least partially coated with a layer of a crosslinked elastomeric material. These reinforcing cords are usually made of textile fibres such as, for example, rayon, nylon, polyethylene terephthalate, or of steel wires which are stranded together, coated with a metal alloy (for example copper/zinc, zinc/manganese, zinc/molybdenum/cobalt alloys and the like).

The carcass ply (101) is usually of the radial type; in other words, it incorporates reinforcing cords arranged in a substantially perpendicular direction with respect to a circumferential direction.

The bead core (102) is enclosed in a bead structure (103), defined along an inner circumferential edge of the tyre (100), with which the tyre engages on a rim (not shown in Fig. 1) forming part of a vehicle wheel. The space defined by each carcass turn-up (101 a) contains a bead filler (104) usually made of a crosslinked elastomeric material.

An antiabrasive strip (105) is usually placed in an axially outer position with respect to the carcass turn-up (101 a).

A belt structure (106) is applied along the circumferential development of the carcass ply (101). In the particular embodiment shown in Fig. 1, the belt structure (106) comprises two belt layers (106a, 106b) which incorporate a plurality of reinforcing cords, typically metal cords, which are parallel to each other in each layer and intersecting with respect to the adjacent layer, orientated so as to form a predetermined angle with respect to a circumferential direction.

On the radially outermost belt layer (106b), at least one zero-degree reinforcing layer (106c), commonly known as a 0° belt", which generally incorporates a plurality of reinforcing cords, typically textile cords, arranged at an angle of few degrees (e.g. an angle of from 0° to 5°) relative to a circumferential direction, usually coated with a crosslinked elastomeric material. In the particular embodiment shown in Fig. 1, two zero-degrees reinforcing layers (106c, 106d).

A sidewall (108), is also applied externally onto the carcass ply (101), this sidewall extending, in an axially external position, from the bead structure (103) to the end of the belt structure (106).

A tread band (109), whose lateral edges are connected to the sidewalls (108), is applied circumferentially in a position radially external with respect to the belt structure (106). Externally, the tread band (109) has a rolling surface (109a) designed to come into contact with the ground. In this surface (109a), shown for simplicity as smooth in Fig. 1, there are generally made circumferential grooves and/or transverse notches (not shown in Fig. 1) so as to typically define a plurality of blocks of various shapes and sizes distributed over the rolling surface (109a).

In the connecting zone between the sidewalls (108) and the tread band (109) there may optionally be present a strip of crosslinked elastomeric material (110) commonly known as a "mini-sidewall", which is generally obtained by co-extrusion with the tread band (109) and enables the mechanical interaction between the tread band (109) and the sidewalls (108) to be improved. Alternatively, the end portion of the sidewall (108) is made to directly cover the lateral edge of the tread band (109). Between the belt structure (106) and the tread band (109) there may optionally be present a tread underlayer (not shown in Fig. 1).

A layer of substantially air-impermeable elastomeric material (111), generally known as the liner, is provided in a radially inner position with respect to the carcass ply (101), to provide the necessary impermeability to the inflation air of the tyre.

A layer of sealing material (107), according to the present invention, is interposed between the liner (111) and the carcass ply (101), i.e., the layer of sealing material (107) is applied in a radially outer position with respect to said liner (111) and in a radially inner position with respect to the carcass ply (101). The layer of sealing material (107) according to the present invention circumferentially extends over a surface substantially corresponding to the surface of development of the tread band (109).

Two strips of crosslinked elastomeric material with an essentially triangular cross section (112) may optionally be placed along each axially outer edge of the layer of sealing material (107), as shown in Fig. 1. Said strips have the function of containing the sealing material in a specified area, thus preventing, for example, infiltrations of the material between the adjacent elements, particularly during the vulcanization of the tyre. Said infiltrations could cause problems of co-vulcanization and detachment of said elements, which would tend to detract from the performance and durability of the finished tyre.

According to a preferred embodiment of the present invention (Fig. 2), a cushion layer (113), or under liner, may also be provided above the liner (111) in the area substantially corresponding to the surface of development of the laterally opposite sidewall regions of the tyre, to avoid contact of liner compound with carcass cords. In this case the layer of sealing material (107), according to the present invention, is laterally contained by said cushion layer (113).

According to another embodiment of the present invention (not shown), the cushion layer (113) may extend over substantially the whole extension of the liner (111). In this case the layer of sealing material (107) is interposed between the cushion layer (113) and the carcass ply (101) and is laterally contained by two strips (112) of crosslinked elastomeric material with an essentially triangular cross section.

The present invention is further illustrated below by means of a number of preparation examples, which are given for purely indicative purposes and without any limitation of this invention.

### EXAMPLES

The compositions given in Table 1 (the amounts of the various components are given in phr) were prepared as follows.

First, the elastomers (IR and SBR 1009) and the peptizer were loaded into an internal mixer of the type with tangential rotors (Banbury), which was rotated at approximately 60 r.p.m for approximately 1 minute. After that, a quarter of the total amount of tackifying agents (Novares^{®}C30, and Durez^{®} 29095) was added and mixing continued for 1 minute. Then, the carbon black (N326), and half part of the tackifying agents was added and the mixing was carried out at approximately 60 r.p.m for approximately 2 minutes. Subsequently, the remaining part of the tackifying agents and the homogenizing agent (Struktol^{®} 40MS) were added and the mixing was carried out at approximately 60 r.p.m. After approximately two minutes, but in any case as soon as the temperature reached 150°C, the compositions were discharged from the mixer and then transferred to an open mill mixer.

**TABLE 1**

| Sample | 1 | 2 |
|---|---|---|
| IR | 75 | 80 |
| SBR 1009 | 25 | 20 |
| Peptizer | 0.3 | 0.5 |
| Novares^{®} C30 | 13 | 20 |
| Durez^{®} 29095 | 11 | 18 |
| Struktol^{®} 40MS | 4 | 7 |
| N326 | 15 | 12 |

IR is a cis-1,4-polyisoprene rubber manufactured by Nizhnekamskneftechim Export, Russia;
SBR 1009 is a pre-crosslinked styrene butadiene rubber manufactured by International Specialty Products (ISP)
Peptizer is PEPTON 66, manufactured by Anchor Chemical Ltd, UK;
Novares^{®} C30 is a coumarone-indene resin, manufactured by Rutgers Chemical GmbH;
Durez^{®} 29095 is a is an alkyl phenolformaldehyde, manufactured by Sumitomo Bakelite Europe, Durez Division
Struktol^{®} 40MS is mixture of aliphatic-naphthenic aromatic hydrocarbon resins (Struktol Corporation);
N326 is carbon black.

The compositions of Samples 1 and 2 were used to prepare a layer of sealing material for Pirelli P7 235/45R17 tyres having the characteristics of the following Table 2.

**TABLE 2**

| Tyre | 1 | 2 | 3 |
|---|---|---|---|
| Composition | Sample 1 | Sample 2 | Sample 2 |
| Sealing layer thickness (mm) | 4.3 | 4.3 | 4.3 |
| Sealing layer position | Between cushion layer and carcass | Between cushion layer and carcass | Between liner and carcass, with lateral cushion layer |
| Cushion layer thickness | 0.6 | 0.6 | 0.6 |
| Liner thickness | 0.6 | 0.6 | 0.8 |

The tyres were mounted on standard rims and inflated to a pressure of about 2.5 bars.

### STATIC TEST

The tyres made as disclosed above were randomly punctured with three sets of 6 nails having length of 60 mm and diameter of 3, 4, and 5 mm, respectively. A set of tyres was left in storage for 72 hours with the nails inserted, and a set of tyres was left in storage for 72 hours after having extracted the nails. At the end of this period, it was found that all the tyres were still substantially inflated.

### DYNAMIC TEST

The tyres were randomly punctured as for the static test. The punctured inflated tyres (with inserted nails) were run under a load of 550 kg at the speed of 120 km/h for a period of 4 hours. A drift angle of about 6° was cyclically applied every 10 minutes for the whole duration of the test. After that, the tyres were stored for 72 hours. The tyres remained inflated for the whole period. After that nails were removed. The results are summarized in the following Table 3, as number of sealed punctures for each nail diameter over the total number of nails (per tyre per diameter).

**TABLE 3**

| Tyre | 1 | 2 | 3 |
|---|---|---|---|
| Nail 3 mm | 5/6 | 6/6 | 6/6 |
| Nail 4 mm | 3/6 | 4/6 | 5/6 |
| Nail 5 mm | 2/6 | 3/6 | 4/6 |

## Claims

1. A tyre (100) for vehicle wheels, comprising:
- a carcass structure of a substantially toroidal shape, having opposite lateral edges terminating in respective bead structures (103), said carcass structure comprising at least one carcass ply (101);
- a belt structure (106) applied in a radially external position with respect to said carcass structure, said belt structure (106) comprising af least one belt layer (106a, 106b);
- a tread band (109) applied in a radially external position with respect to said belt structure (106);
- a pair of sidewalls (108) applied laterally on opposite sides with respect to said carcass structure;
- a substantially air-impermeable layer (111) applied in a radially inner position with respect to said at least one carcass ply (101);
- a layer of sealing material (107) applied in a radially inner position with respect to said at least one carcass ply (101);
**characterized in that** said sealing material comprises:
- from 55 phr to 95 phr of at least one natural or synthetic elastomer;
- from 5 phr to 45 phr of at least one pre-crosslinked elastomer;
- from 5 to 50 phr of at least one tackifying agent; and
- from 1 to 40 phr of at least one reinforcing filler.

2. Tyre (100) according to Claim 1, wherein said layer of sealing material (107) is applied in a radially outer position with respect to said substantially air-impermeable layer (111).

3. Tyre (100) according to Claim 2, wherein a cushion layer (113) is applied between said substantially air-impermeable layer (111) and said at least one carcass ply (101).

4. Tyre (100) according to Claim 3, wherein said cushion layer (113) is only applied in the laterally opposite sidewall regions of the tyre (100).

5. Tyre (100) according to any one of the preceding claims, in which said at least one layer of sealing material (107) circumferentially extends over a surface substantially corresponding to the surface of development of said tread band (109).

6. Tyre (100) according to any one of the preceding claims, in which a strip of crosslinked elastomeric material (112) is applied along each axially outer edge of said at least one layer of sealing material (107).

7. Tyre (100) according to any one of the preceding claims, wherein said substantially air-impermeable layer (111) has a thickness lower than 1.0 mm.

8. Tyre (100) according to any one of the preceding claims, wherein said at least one layer of sealing material (107) has a thickness in the range of from 1 mm to 15 mm.

9. Tyre (100) according to Claim 8, wherein said at least one layer of sealing material (107) has a thickness in the range of from 5 mm to 10 mm.

10. Tyre (100) according to any one of the preceding claims, wherein said at least one natural or synthetic elastomer is selected from the group comprising natural and synthetic polymers and copolymers of one or more conjugated diolefins.

11. Tyre (100) according to any one of the preceding claims, wherein said at least one pre-crosslinked elastomer is selected from the group comprising pre-crosslinked styrene-butadiene copolymers produced by hot emulsion polymerization having styrene contents of from 1 to 60% by weight, preferably from 2 to 50% by weight.

12. Tyre (100) according to any one of the preceding claims, wherein said at least one tackifying agent is selected from the group comprising synthetic and natural hydrocarbon resins.

13. Tyre (100) according to Claim 12, wherein said synthetic hydrocarbon resins are selected from the group comprising petroleum-based resins, phenot-based resins, coal-based resins and xylene-based resins.

14. Tyre (100) according to any one of the preceding claims, wherein said at least one reinforcing filler is selected from the group comprising carbon black, silica, alumina, aluminosilicates, calcium carbonate, kaolin, and mixtures thereof.

15. Tyre (100) according to claim 14, wherein said at least one reinforcing filler is selected from the group comprising carbon black, silica, and mixtures thereof.

16. A sealing material **characterized in that** it comprises:
- from 55 phr to 95 phr of at least one natural or synthetic elastomer;
- from 5 phr to 45 phr of at least one pre-crosslinked elastomer;
- from 5 to 50 phr of at least one tackifying agent; and
- from 1 to 40 phr of at least one reinforcing filler.

## Patentansprüche

1. Reifen (100) für Fahrzeugräder, umfassend:
- eine Karkassenstruktur von im wesentlichen toroidaler Form, die gegenüberliegende Seitenkanten aufweist, die in entsprechende Wulststrukture (103) enden, worin die Karkassenstruktur mindestens eine Karkassenlage (101) umfasst;
- eine Gürtelstruktur (106), die in radial äußerer Position in Bezug auf die die Karkassenstruktur angebracht ist, worin die Gürtelstruktur (106) mindestens eine Gürtelschicht (106a, 106b) umfasst;
- ein Laufflächenband (109), das in radial äußerer Position in Bezug auf die Gürtelstruktur (106) angebracht ist;
- ein Paar von Seitenwänden (108), die lateral auf gegenüberliegenden Seiten in Bezug auf die Karkassenstruktur angebracht sind;
- eine im wesentlichen luftundurchlässige Schicht (111), die in radial innerer Position in Bezug auf die mindestens eine Karkassenlage (101) angebracht ist;
- eine Dichtungsmaterialschicht (107), die in radial innerer Position in Bezug auf die mindestens eine Karkassenlage (101) angebracht ist;
**dadurch gekennzeichnet, dass** das Dichtungsmaterial umfasst:
- von 55 phr bis 95 phr an mindestens einem natürlichen oder synthetischen Elastomer;
- von 5 phr bis 45 phr an mindestens einem vorvernetzten Elastomer;
- von 5 bis 50 phr an mindestens einem klebrigmachenden Mittel; und
- von 1 bis 40 phr an mindestens einem verstärkenden Füllstoff.

2. Reifen (100) gemäß Anspruch 1, worin die Dichtungsmaterialschicht (107) in einer radial äußeren Position in Bezug auf die im wesentlichen luftundurchlässige Schicht (111) angebracht ist.

3. Reifen (100) gemäß Anspruch 2, worin eine Kissenschicht (113) zwischen der im wesentlichen luftundurchlässigen Schicht (111) und der mindestens einer Karkassenlage (101) angebracht ist.

4. Reifen (100) gemäß Anspruch 3, worin die Kissenschicht (113) nur in dem lateral gegenüberliegenden Seitenwandregionen des Reifens (100) angebracht ist.

5. Reifen (100) gemäß irgendeinem der vorhergehenden Ansprüche, worin die mindestens eine Dichtungsmaterialschicht (107) sich in Umfangsrichtung über eine Oberfläche erstreckt, die im wesentlichen der Oberfläche der Entwicklung des Laufflächenbandes (109) entspricht.

6. Reifen (100) gemäß irgendeinem der vorhergehenden Ansprüche, worin ein Streifen von vernetztem Elastomermaterial (112) entlang jeder axial äußeren Kante der mindestens einen Schicht des Dichtungsmaterials (107) angebracht ist.

7. Reifen (100) gemäß irgendeinem der vorhergehenden Ansprüche, worin die im wesentlichen luftundurchlässige Schicht (111) eine Dicke von weniger als 1,0 mm hat.

8. Reifen (100) gemäß irgendeinem der vorhergehenden Ansprüche, worin die mindestens eine Dichtungsmaterialschicht (107) eine Dicke im Bereich von 1 mm bis 15 mm hat.

9. Reifen (100) gemäß Anspruch 8, worin die mindestens eine Dichtungsmaterialschicht eine Dichte im Bereich von 5 mm bis 10 mm hat.

10. Reifen (100) gemäß irgendeinem der vorhergehenden Ansprüche, worin das mindestens eine natürliche oder synthetische Elastomer aus der Gruppe bestehend aus natürlichen und synthetischen Polymeren und Copolymeren von ein oder mehreren konjugierten Diolefinen ausgewählt ist.

11. Reifen (100) gemäß irgendeinem der vorhergehenden Ansprüche, worin das mindestens eine vorvernetzte Elastomer aus der Gruppe bestehend aus vorvernetzten Styrol-Butatien-Copolymeren ausgewählt ist, die durch Heißemulsionspolymerisation hergestellt sind, mit Styrolgehalten von 1 bis 60 Gew.%, vorzugweise von 2 bis 50 Gew.%.

12. Reifen (100) gemäß irgendeinem der vorhergehenden Ansprüche, worin das mindestens eine klebrigmachende Mittel aus der Gruppe bestehend aus synthetischen und natürlichen Kohlenwasserstoffharzen ausgewählt ist.

13. Reifen (100) gemäß Anspruch 12, worin die synthetischen Kohlenwasserstoffharze aus der Gruppe bestehend aus Harzen auf Petrolumbasis, Harzen auf Phenolbasis, harzen auf Kohlebasis und Harzen auf Xylolbasis ausgewählt sind.

14. Reifen (100) gemäß irgendeinem der vorhergehenden Ansprüche, worin der mindestens eine verstärkende Füllstoff aus der Gruppe bestehend aus Ruß, Siliziumdioxid, Aluminiumoxid, Aluminosilikate, Kalziumcarbonat, Kaolin und Mischungen daraus ausgewählt ist.

15. Reifen (100) gemäß Anspruch 14, worin der mindestens eine verstärkende Füllstoff aus der Gruppe bestehend aus Ruß, Siliziumdioxid und Mischungen daraus ausgewählt ist.

16. Dichtungsmaterial, **dadurch gekennzeichnet, dass** es umfasst:
- von 55 phr bis 95 phr an mindestens einem natürlichen oder synthetischen Elastomer;
- von 5 phr bis 45 phr an mindestens einem vorvernetzten Elastomer;
- von 5 bis 50 phr an mindestens einem klebrigmachenden Mittel; und
- von 1 bis 40 phr an mindestens einem verstärkenden Füllstoff.

## Revendications

1. Pneu (100) pour roues de véhicule, comprenant :
- une structure de carcasse de forme sensiblement toroïdale, ayant des bords latéraux opposés se terminant par des structures de talon respectives (103), ladite structure de carcasse comprenant au moins une nappe de carcasse (101) ;
- une structure de ceinture (106) appliquée en une position externe radialement par rapport à ladite structure de carcasse, ladite structure de ceinture (106) comprenant au moins une couche de ceinture (106a, 106b) ;
- une bande de roulement (109) appliquée en une position externe radialement par rapport à ladite structure de ceinture (106) ;
- une paire de flancs (108) appliquée latéralement sur des cotés opposés par rapport à ladite structure de carcasse ;
- une couche sensiblement imperméable à l'air (111) appliquée en une position interne radialement par rapport à ladite au moins une nappe de carcasse (101) ;
- une couche de matériau d'étanchéité (107) appliquée en une position interne radialement par rapport à ladite au moins une nappe de carcasse (101) ;
**caractérisé en ce que** ledit matériau d'étanchéité comprend :
- de 55 parties pour cent parties de polymère en masse à 95 parties pour cent parties de polymère en masse d'au moins un élastomère naturel ou synthétique ;
- de 5 parties pour cent parties de polymère en masse à 45 parties pour cent parties de polymère en masse d'au moins un élastomère pré-réticulé ;
- de 5 à 50 parties pour cent parties de polymère en masse d'au moins un agent adhésif ;
- de 1 à 40 parties pour cent parties de polymère en masse d'au moins une charge de renfort.

2. Pneu (100) selon la revendication 1, dans lequel ladite couche de matériau d'étanchéité (107) est appliquée en une position externe radialement par rapport à ladite couche sensiblement imperméable à l'air (111).

3. Pneu (100) selon la revendication 2, dans lequel une couche d'amortissement (113) est appliquée entre ladite couche sensiblement imperméable à l'air (111) et ladite au moins une nappe de carcasse (101).

4. Pneu (100) selon la revendication 3, dans lequel ladite couche d'amortissement (113) est appliquée uniquement dans des régions de flanc opposées latéralement du pneu (100).

5. Pneu (100) selon l'une quelconque des revendications précédentes, dans lequel ladite au moins une couche de matériau d'étanchéité (107) s'étend circonférentiellement sur une surface correspondant sensiblement à la surface de développement de ladite bande de roulement (109).

6. Pneu (100) selon l'une quelconque des revendications précédentes, dans lequel une bande de matériau élastomère réticulé (112) est appliquée le long de chaque bord externe axialement de ladite au moins une couche de matériau d'étanchéité (107).

7. Pneu (100) selon l'une quelconque des revendications précédentes, dans lequel ladite couche sensiblement imperméable à l'air (111) a une épaisseur inférieure à 1,0 mm.

8. Pneu (100) selon l'une quelconque des revendications précédentes, dans lequel ladite au moins une couche de matériau d'étanchéité (107) a une épaisseur dans l'intervalle de 1 mm à 15 mm.

9. Pneu (100) selon la revendication 8, dans lequel ladite au moins une couche de matériau d'étanchéité (107) a une épaisseur dans l'intervalle de 5 mm à 10 mm.

10. Pneu (100) selon l'une quelconque des revendications précédentes, dans lequel ledit au moins un élastomère naturel ou synthétique est choisi parmi le groupe comprenant des polymères naturels et synthétiques et des copolymères d'une ou plusieurs dioléfines conjuguées.

11. Pneu (100) selon l'une quelconque des revendications précédentes, dans lequel ledit au moins un élastomère pré-réticulé est choisi parmi le groupe comprenant des copolymères de styrène-butadiène pré-réticulé produits par polymérisation en émulsion à chaud ayant une teneur en styrène de 1 à 60% en masse, de préférence de 2 à 50% en masse.

12. Pneu (100) selon l'une quelconque des revendications précédentes, dans lequel ledit au moins un agent adhésif est choisi parmi le groupe comprenant des résines hydrocarbonées synthétiques et naturelles.

13. Pneu (100) selon la revendication 12, dans lequel lesdites résines hydrocarbonées synthétiques sont choisies parmi le groupe comprenant des résines à base de pétrole, des résines à base de phénol, des résines à base de charbon et des résines à base de xylène.

14. Pneu (100) selon l'une quelconque des revendications précédentes, dans lequel ladite au moins une charge de renfort est choisie parmi le groupe comprenant du noir de carbone, de la silice, de l'alumine, des aluminosilicates, du carbonate de calcium, du kaolin, et leurs mélanges.

15. Pneu (100) selon la revendication 14, dans lequel ladite au moins une charge de renfort est choisie parmi le groupe comprenant du noir de carbone, de la silice et leurs mélanges.

16. Matériau de renfort **caractérisé en ce qu'**il comprend :
- de 55 parties pour cent parties de polymère en masse à 95 parties pour cent parties de polymère en masse d'au moins un élastomère naturel ou synthétique ;
- de 5 parties pour cent parties de polymère en masse à 45 parties pour cent parties de polymère en masse d'au moins un élastomère pré-réticulé ;
- de 5 à 50 parties pour cent parties de polymère en masse d'au moins un agent adhésif;
- de 1 à 40 parties pour cent parties de polymère en masse d'au moins une charge de renfort.
